# EUROPEAN PATENT APPLICATION

(11) **EP 2 157 742 A1**
(43) Date of publication of application: **24.02.2010**
(21) Application number: 08765033.9
(22) Date of filing: 03.06.2008
(51) Int. Cl.: H04L 12/56, H04L 29/10

(54) **COMMUNICATION APPARATUS CONNECTION DEVICE**

(30) Priority: 08.06.2007 JP 2007152734
(71) Applicant: Sanden Corporation, Isesaki-shi Gunma 372-8502 (JP)
(72) Inventor: IWAZAKI, Wataru, Isesaki-shi Gunma 372-8502 (JP); SUGA, Masakazu, Isesaki-shi Gunma 372-8502 (JP); KURIBARA, Saori, Isesaki-shi Gunma 372-8502 (JP); MOTEGI, Toshiyuki, Isesaki-shi Gunma 372-8502 (JP); OHTSUKI, Takahiro, Isesaki-shi Gunma 372-8502 (JP)
(74) Representative: Haley, Stephen
(86) International application number: PCT/JP2008/060220
(87) International publication number: WO 2008/149861

(57) **Abstract**

A connection adapter (1) is disposed intervening between a communication module (20) for connection to a radio packet communication network (40) and high-level equipment (10). The connection adapter (1) comprises a connection controller (121) for controlling connection between the high-level equipment (10) and the radio packet communication network (40), and a communication controller (122) for relaying the communication by the high-level equipment (10) using the communication module (20). When the communication controller (122) of the connection adapter (1) detects duplication of a TCP packet received from the high-level equipment (10), the communication controller (122) discards the duplicated packet.

## Description

### TECHNICAL FIELD

The present invention relates to the field of telemetering used for such purposes as collection of sales information from vending machines or the field of telematics used for distribution of traffic information to mobile objects and like purposes. More particularly, the present invention relates to a connection adapter for connecting a communication device used in these fields to high-level equipment that uses the communication device.

### BACKGROUND ART

Recently, telemetring and telematics for collecting and distributing information over a radio packet communication network have become widespread. The telemetring originally refers to a system of reading a measured value by a measure via a communication line. However, it has been generally used as a term indicating not only reading data but also monitoring the operation of equipment and performing remote control. A typical application of telemetring can be a sales management system of a vending machine, use amount management system of a gas, water supply, etc., and a management system for unmanned parking lots, etc. For a sales management system of a vending machine, refer to the patent document 1. The telematics refers to providing information service in real time by combining a mobile object such as an automobile with a communication system. A typical application of telematics can be a vehicle-mounted information system etc. for providing a terminal provided for a vehicle with traffic information and navigation information in real time.

In such fields, a user in a remote location would require a communication device for connection to the radio pack communication network and high-level equipment using the communication device. The high-level equipment corresponds to DTE (Data Terminal Equipment), and the communication device corresponds to DCE (Data Circuit-terminating Equipment).

In the sales management system for a vending machine, for instance, the control equipment which regulates selling actions and the inside temperature correspond to the high-level equipment. Each of high-level equipment connects to a predetermined network via a communication device regularly or at random timing, and connects to a predetermined management computer via the network. The high-level equipment connected to the management computer transmits various sets of data on the objects to be controlled.

PATENT DOCUMENT 1: Japanese Patent Publication 2003-51056

### DISCLOSURE OF THE INVENTION

### PROBLEMS TO BE SOLVED BY THE INVENTION

In conventional systems, a case occurs in which traffic of the communication data between the high-level equipment and the management computer increases too much. A case of conventional monitoring system of sewage flow rate will be described. In this system, the high-level equipment and the management computer uses TCP/IP protocol as communication protocol. The high-level equipment establishes a TCP connection to the management computer and sends flow rate data to the management computer over the connection.

In such situation, the high-level equipment often sends same TCP packets doubly to the management computer. A factor of the behavior is considered as follows. The transmission delay of the radio packet communication network, which forms a part of communication path, is relatively long. Therefore, when the high-level equipment sends TCP packets to the management computer, it takes certain time for acknowledgement packets to reach to the high-level equipment in response to the TCP packets. Herewith, the high-level equipment may not receive the acknowledgement packets in predetermined time (an occurrence of time-out). In this case, the high-level equipment judges an occurrence of packet loss, and then resends TCP packets having same contents as the previously sent TCP packets. If double transmission occurs frequently, a load of the network will increase, and then this may causes a decline of communication speed. Additionally this causes a problem of increase of communication charge if the radio packet communication network applies measurement rate system (usage-based rate system) according to number of the packets as the charge system.

In order to solve above problems, the predetermined time for occurrence of the time-out may be changed in the high-level equipment. It is, however, troublesome to have a configuration change and remodel the high-level equipments. And some type of high-level equipments can not be applied the configuration change and the remodeling.

In view of the above problems in the conventional art, the present invention has an object to provide high-efficiency of communication using the radio packet communication network and improvement of economical efficiency.

### MEANS FOR SOLVING THE PROBLEMS

In order to achieve the object stated above, the present application proposes a connection adapter for connecting a communication device for use in a radio packet communication network and high-level equipment which performs communication utilizing TCP/IP by using said communication device, comprising a connection controller which controls a connection between said high-level equipment and said radio packet communication network; and a communication controller which relays communication by said high-level equipment using said communication device; wherein when said communication controller detects duplication of a TCP packet which the high-level equipment sent to said radio packet communication network, said communication controller discards the duplicated TCP packet.

According to the invention, if TCP packets sent from the high-level equipment to communication destination is duplicated, the connection adapter which is intervening between the high-level equipment and the communication device discards the duplicated packet without sending to the radio packet communication network. Therefore, any unnecessary packets are not flowed out to the radio packet communication network. Additionally network load can be decreased and communication fee can be reduced.

The high-level equipment corresponds to DTE (Data Terminal Equipment), and the communication device corresponds to DCE (Data Circuit-terminating Equipment).

The present application also proposes the connection adapter for communication device, further comprising storage means for storing a TCP packet sent to said radio packet communication network, wherein when the TCP packet having same sequence number as the TCP packet received from said high-level equipment is stored in said storage means, said communication controller discards the received TCP packet, and when the TCP packet having same sequence number as the TCP packet received from said high-level equipment is not stored in said storage means, said communication controller sends the received TCP packet to said radio packet communication network.

This invention enables to detect and discard the duplicated packets according to the sequence number of the TCP packet.

The present application also proposes the connection adapter for communication device, wherein upon receipt of an acknowledgment TCP packet from said radio packet communication network, said communication controller compares an ACK number of the received TCP packet and a minimum number of a sum of sequence number and data length of the TCP packet stored in said storage means; and if the ACK number is smaller than the minimum number, said communication controller resends the TCP packet stored in said storage means to said radio packet communication network.

Normally if there is no communication trouble of packet loss on a communication route, an ACK number of acknowledgment TCP packet received from the radio packet communication network is equal to or greater than the sum of sequence number and data length of the former TCP packet sent to the radio packet communication network. And if the ACK number of acknowledgment TCP packet received from the radio packet communication network is smaller than the sum of the sequence number and the data length of the former TCP packet sent to the radio packet communication network, resending data to the radio packet communication network is required. In this invention, the connection adapter performs the resending process instead of the high-level equipment. Therefore a load of the high-level equipment can be reduced.

### ADVANTAGES OF THE INVENTION

As described above, according to the present invention, if TCP packets sent from the high-level equipment to communication destination is duplicated, the connection adapter which is intervening between the high-level equipment and the communication device discards the duplicated packet without sending to the radio packet communication network. Therefore, any unnecessary packets are not flowed out to the radio packet communication network. Additionally network load can be decreased and communication fee can be reduced.

### BRIEF DESCRIPTION OF THE DRAWINGS

Fig. 1 shows a configuration view of a communication system;
Fig. 2 shows a block diagram of the connection adapter;
Fig. 3 illustrates an example of setting information in the connection adapter;
Fig. 4 illustrates an example of data structure of a packet temporary storage unit;
Fig. 5 illustrates the sequence of the communication starting from high-level equipment;
Fig. 6 illustrates address conversion processing;
Fig. 7 illustrates the sequence of the communication starting from a management computer;
Fig. 8 illustrates the sequence of the communication starting from a management computer;
Fig. 9 illustrates address conversion processing;
Fig. 10 shows a flow chart of control of TCP packets;
Fig. 11 shows a flow chart of control of TCP packets.

### DESCRIPTION OF SYMBOLS

- 1: connection adapter
- 121: connection controller
- 122: communication controller
- 152: packet temporary storage unit
- 10: high-level equipment
- 20: communication module
- 40: radio packet communication network
- 42: messaging server
- 43: address management server
- 50: in-house LAN
- 51: management computer
- 60: network router

### BEST MODE FOR CARRYING OUT THE INVENTION

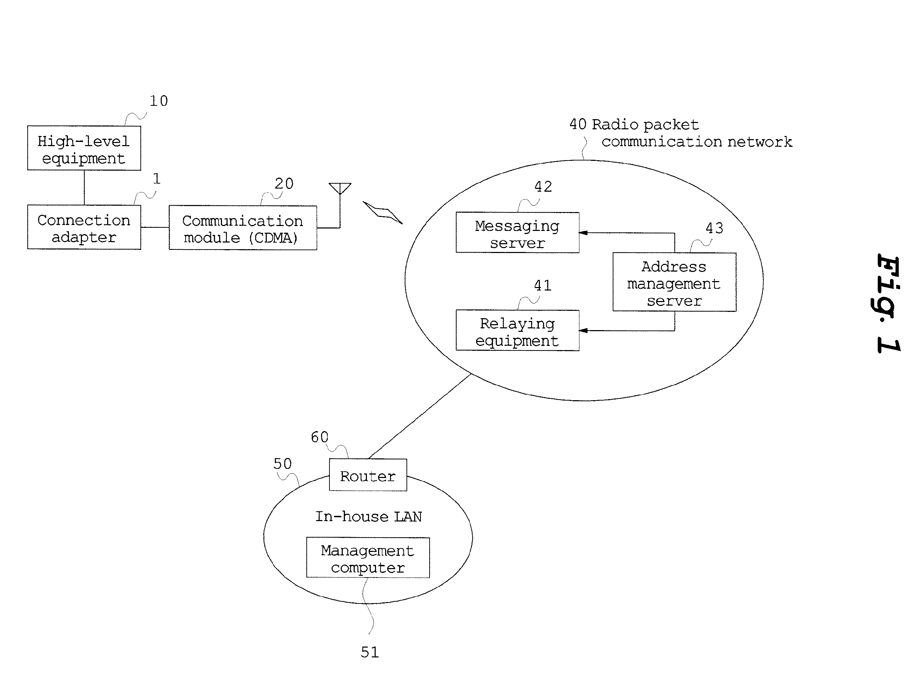

A communication system, which is an embodiment of the present invention, will be described with reference to accompanying drawings. Fig. 1 shows the configuration of a telemetering system using the communication system according to the invention.

This system provides, as shown in Fig. 1, a network environment which connects high-level equipment 10, which may be a computer for sewage flow rate monitoring for instance, and an in-house LAN 50 via a radio packet communication network 40.

It is supposed here that the high-level equipment 10 and a terminal in the in-house LAN 50 (a management computer 51 in Fig. 1) are set for use by a network connection service which assigns IP addresses in a fixed manner. On the other hand, the radio packet communication network 40 is supposed to provide another network service which assigns IP addresses dynamically. According to the invention disclosed by the present application, a connection adapter 1 is arranged to intervene between the high-level equipment 10 and a communication module 20, and this connection adapter 1 absorbs differences in the network environment.

The high-level equipment 10 corresponds to DTE (Data Terminal Equipment). This high-level equipment 10 is designed to match a specific carrier and a network connection service provided by that carrier. More specifically, it presupposes the use of a network connection service which assigns a fixed IP address to each connection terminal. The high-level equipment 10 is also designed to be connected to a communication module matching the service and to match a connection protocol, an authentication protocol and the like matching that service.

The network connection service which the high-level equipment 10 in this configuration presupposes will be described. In this network connection service, a telephone number is allocated in advance to each communication module by the carrier. The radio packet communication network provided by this network connection service is provided with relaying equipment which performs connection control, packet relaying and so forth. To the relaying equipment, a telephone number is allocated, corresponding to an in-house LAN which is the network to be connected to. When a call is initiated to the telephone number of the relaying equipment within the radio packet communication network, the terminal having the communication module is connected to a predetermined network, such as an in-house LAN. Connection to the relaying equipment is permitted only from a communication module to which a telephone number is allocated in advance.

The present invention presupposes the use of such high-level equipment 10 and the management computer 51 as they are, and allows architecting of a network system even in the radio packet communication network 40 in which the network connection service assigning dynamic IP addresses is provided.

Next, the network connection service which assigns dynamic IP addresses and is used in this embodiment of the invention will be described. In this network connection service, a telephone number is allocated to the communication module 20 in advance by the carrier. In this radio packet communication network 40, as shown in Fig. 1, there is provided relaying equipment 41 which performs connection control, packet relaying and so forth. The terminal having the communication module 20 is connected to the radio packet communication network 40 by designating a predetermined special number and initiating a call to that number. This terminal is made connectable to the in-house LAN 50, the network to which it is to be connected, by performing authentication processing with the relaying equipment 41 using PAP (Password Authentication Protocol). In the PAP authentication, the network to be connected to is specified by including a user name which specifies the destination of connection. In this network connection service, a group of IP addresses in a predetermined range are allocated by the carrier to the radio packet communication network 40. An IP address included in the group of IP addresses is dynamically allocated to the communication module 20 by IPCP (Internet Protocol Control Protocol).

The IP address assigned to the connection terminal here is a predetermined one. As shown in Fig. 1, an address management server 43 is disposed in the radio packet communication network 40. This address management server 43 manages a list of the telephone numbers of connection terminals and IP addresses to be distributed to the terminals having those telephone numbers. The address management server 43 is provided with an address matching table stating the relationship of matching between the telephone numbers and the IP addresses. This address management server 43 also provides users with interfaces for updating the address matching table.

In this connection service, the radio packet communication network 40, when a terminal comes into connection, acquires a telephone number of that connection terminal. Then it acquires an IP address matching that telephone number from the address matching table, and distributes the acquired IP address to the connection terminal. This address distribution uses the IPCP mentioned above. Thus in this embodiment, though it uses the IPCP which is a dynamic IP assigning technique, the IP address distributed is a predetermined one.

Further in this connection service, the radio packet communication network 40 receives from the in-house LAN 50 an IP packet destined for the IP address matching the terminal and, when that terminal is not connected to the radio packet communication network 40, a messaging server 42 transmits a message. More specifically, the messaging server 42 acquires from the address management server 43 a telephone number matching the received IP packet, and transmits the message to that telephone number. This messaging service is not a network connection service using TCP/IP, but is implemented by a unique protocol using the radio communication network. This enables the terminal to recognize the receipt of a connection request from the in-house LAN 50.

Next, the connection adapter 1 will be described in detail. This connection adapter 1 is intended to connect the high-level equipment 10 corresponding to Data Terminal Equipment and the communication module 20 corresponding to DCE (Data Circuit-terminating Equipment). The connection adapter 1 in this embodiment, it matches the communication module 20 of the CDMA (Code Division Multiple Access) standards. The communication module 20 is a communication device to be connected to the radio packet communication network 40 built by a carrier, and matches the communication standards and the communication protocol service determined by the carrier on its own. The high-level equipment 10, as stated above, is designed to match a specific carrier and the service provided by that carrier. More specifically, it is designed to accept the connection of a communication module matching that service and to be compatible with a connection protocol, an authentication protocol and the like matching that service.

The high-level equipment 10 pertaining to this embodiment is supposed to permit direct connection to a communication module of the PDC (Personal Digital Cellular) standards and a communication module of the PHS (Personal Handy-phone System) standards. It is further supposed to be made connectable to the in-house LAN 50 via each radio packet communication network by using these communication modules. The connection adapter 1 of this embodiment is made connectable to the in-house LAN 50 via the radio packet communication network 40 by using the communication module 20 of the CDMA standards without requiring remodeling or altering the high-level equipment 10. The connection adapter 1 will be described in further detail below.

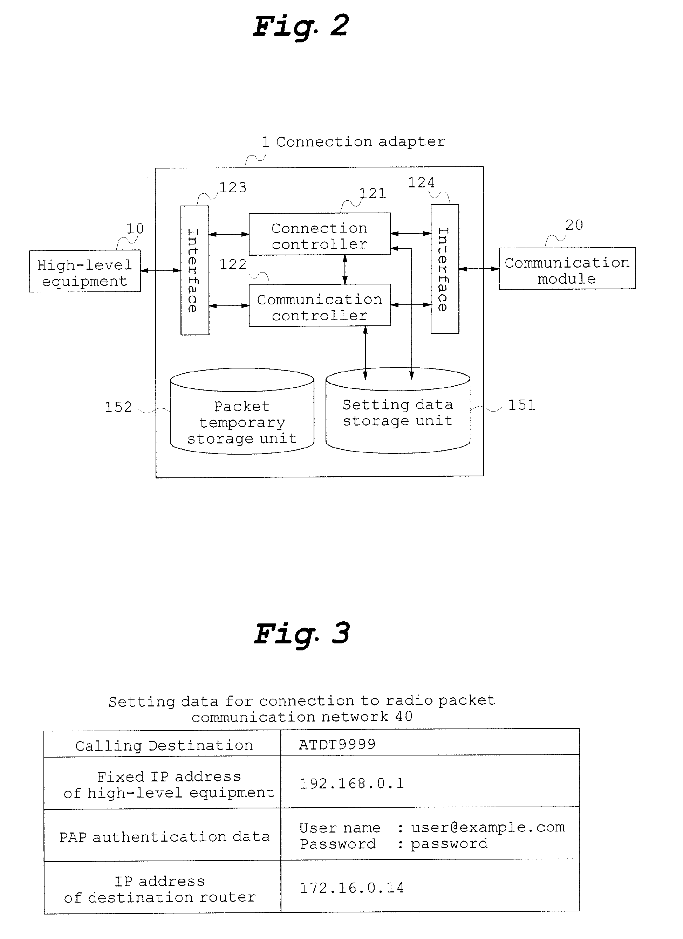

A configurative diagram of the connection adapter 1 of this embodiment of the invention will be described with reference to Fig. 2. Fig. 2 is a functional block diagram of the connection adapter 1. Only those configurative elements relevant to the essentials of the invention are stated in Fig. 2, with other elements omitted.

As shown in Fig. 2, the connection adapter 1 is provided with a connection controller 121 for performing connection control such as establishment of line connection, a communication controller 122 for controlling data communication over a connection established by the connection controller 121, an interface 123 for interfacing with the high-level equipment 10, an interface 124 for interfacing with the communication module 20, a setting data storage unit 151 in which various setting data are stored and a packet temporary storage unit 152 for temporarily storing packets. The connection controller 121 performs line connection control by AT commands and IP layer connection control by LCP (Link Control Protocol) and IPCP. The communication controller 122 performs processing of conversion of IP addresses contained in the headers of the IP layer, processing of proxy responses regarding TCP packets and so forth in data communication over the connection established by the connection controller 121.

The connection controller 121 and the communication controller 122 subject data between the high-level equipment 10 and the communication module 20 to conversion, transmission, discarding and other manners of processing in accordance with predetermined rules. The data necessary for these manners of data processing are stored in the setting data storage unit 151.

The data stored in the setting data storage unit 151 will be described with reference to Fig. 3. As shown in Fig. 3, the setting data storage unit 151 stores an initiation command (including telephone number) for connecting to the radio packet communication network 40, the fixed IP address of the high-level equipment 10, authentication data to be needed at the time of connecting to the radio packet communication network 40 and an IP address of a router 60 as a connection destination. The setting data storage unit 151 is formed of a nonvolatile memory, such as an EPROM for instance.

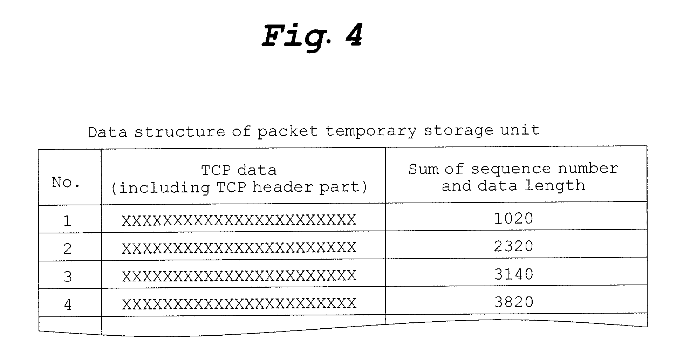

The packet temporary storage unit 152 temporarily stores packets for retransmission process of packets (after-mentioned) in the communication controller 122, etc. The packet temporary storage unit 152 is formed of a memory such as an SRAM for instance. Fig. 4 shows an example of data stored in the packet temporary storage unit 152. As shown in Fig. 4, the packet temporary storage unit 152 stores a TCP packet including the header part and the sum of sequence number and data length written in the header part of the TCP packet, and the TCP packet and the sum are associated. The sum of the sequence number and the data length are redundant because the sum is included in the TCP packet. In this embodiment, this redundancy provides a reduction of the processing load on after-mentioned data process of TCP packets. Specifically an extraction process of the sequence number and the data length and an addition process can be omitted on the after-mentioned data process of TCP packets. The data stored in the packet temporary storage unit 152 will be discarded when the communication is terminated, specifically when the TCP session is terminated.

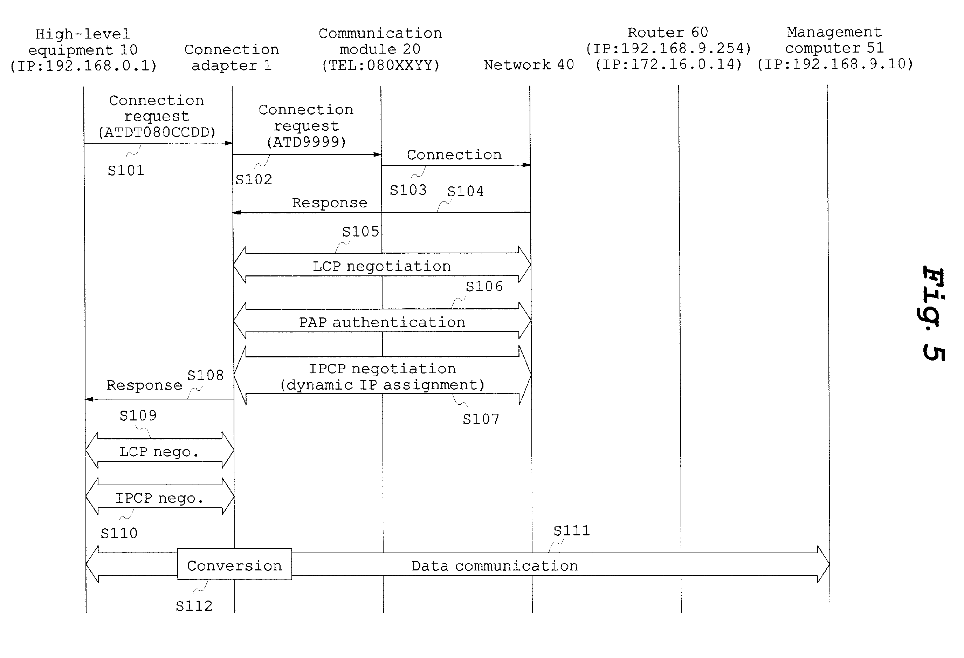

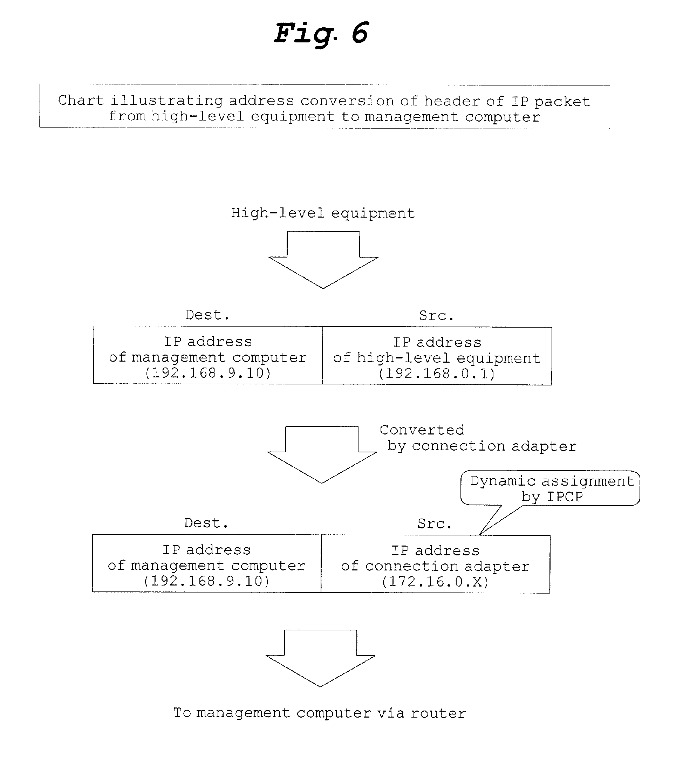

Next, the communication procedure in this system will be described with reference to drawings. First, a case of starting communication from the high-level equipment 10 to the management computer 51 will be described with reference to Fig. 5 and Fig. 6. Fig. 5 is a sequence chart of a case of starting communication from the high-level equipment to the management computer, and Fig. 6 illustrates the conversion process of an IP address stated in the header of an IP packet transmitted from the high-level equipment.

As shown in Fig. 5, when the high-level equipment 10 initiates a call to the connection adapter 1 with an "ATDT080CCDD" command (step S101), the connection controller 121 of the connection adapter 1 converts the command into "ATD9999" and transfers it to the communication module 20 (step S102). This call initiation may be triggered by, for instance, the generation of an IP packet having a destination address of 192.168.9.10 as shown in Fig. 6. The AT command causes the communication module 20 to initiate a call to the relaying equipment 41 in the radio packet communication network 40 (step S103). The connection controller 121 of the connection adapter 1, upon receiving a response "CONNECT" to the effect that connection has been completed at the line level via the communication module 20 (step S104), starts processing to connect the connection adapter 1 to the in-house LAN 50 by PPP (Point-to-Point Protocol).

First, the connection controller 121 of the connection adapter 1 starts an LCP negotiation with the relaying equipment 41 of the radio packet communication network 40 (step S105). Next, the connection controller 121 of the connection adapter 1 processes PAP authentication with the relaying equipment 41 of the radio packet communication network 40 (step S106). This PAP authentication, though it is not supposed for the high-level equipment 10, is required when the radio packet communication network 40 pertaining to this embodiment is to be used. Therefore in this embodiment, the connection adapter 1 performs this authentication on behalf of the high-level equipment 10. Upon completion of this authentication processing, the connection controller 121 of the connection adapter 1 starts an IPCP negotiation with the relaying equipment 41 of the radio packet communication network 40 (step S107). This results in completion of the IPCP negotiation, and a dynamic IP address of 172.16.0.X is assigned to the connection controller 121 of the connection adapter 1 from the radio packet communication network 40. The IP address assigned here is predetermined for the communication module 20, which is a connection terminal. The assigned dynamic IP address is stored into storage means such as an EPROM (not shown).

Upon completion of the PPP negotiation, the connection controller 121 transmits to the high-level equipment 10 a response "CONNECT" to the effect that connection has been completed at the line level (step S108). Having received that response, the high-level equipment 10 starts an LCP negotiation and an IPCP negotiation (steps 109, S110). A point to be noted here is that the connection controller 121 of the connection adapter 1 responds to the high-level equipment 10.

As the foregoing processing completes the connection between the high-level equipment 10 and the in-house LAN 50, the high-level equipment 10 starts data communication to the management computer 51 (step S111). Hereupon, the communication controller 122 of the connection adapter 1 performs address conversion of the header of the IP packet (step S112). More specifically, as shown in Fig. 6, the fixed IP address (192.168.0.1) and the dynamic terminal IP address (172.16.0.X) are converted into each other. This processing makes possible communication with the management computer 51 started from the high-level equipment 10.

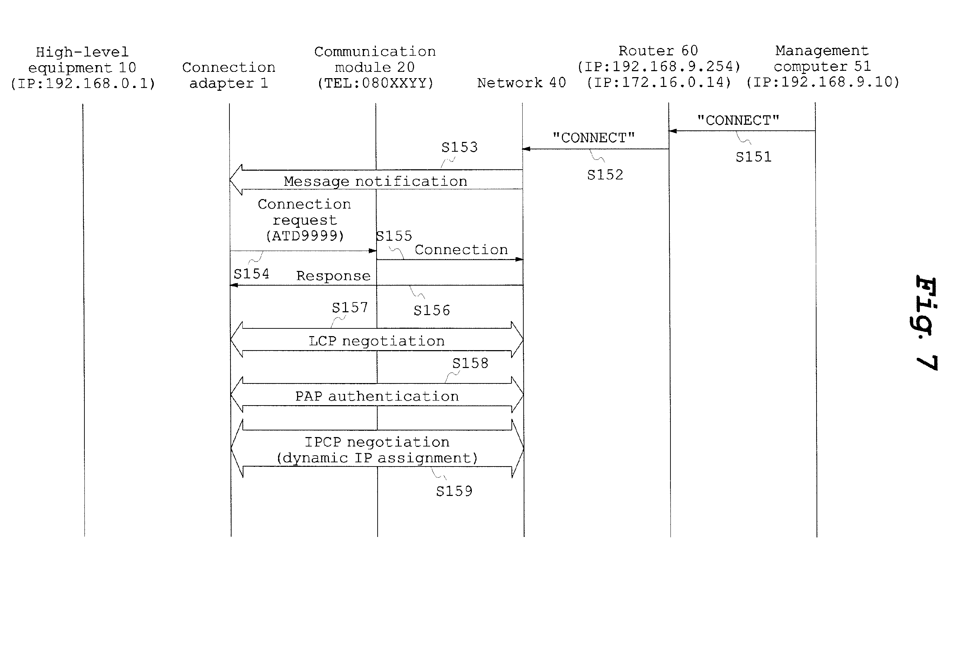

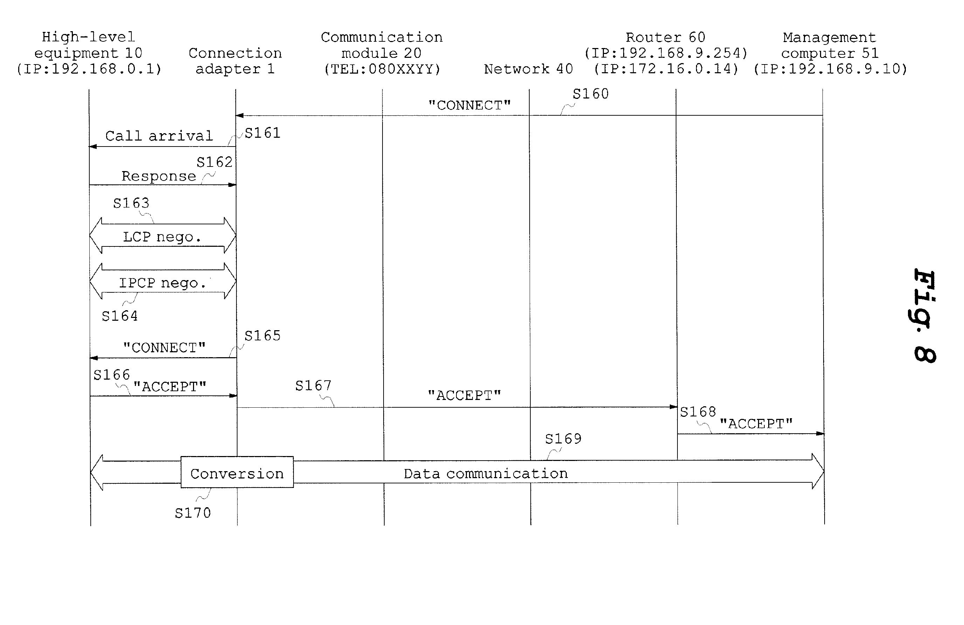

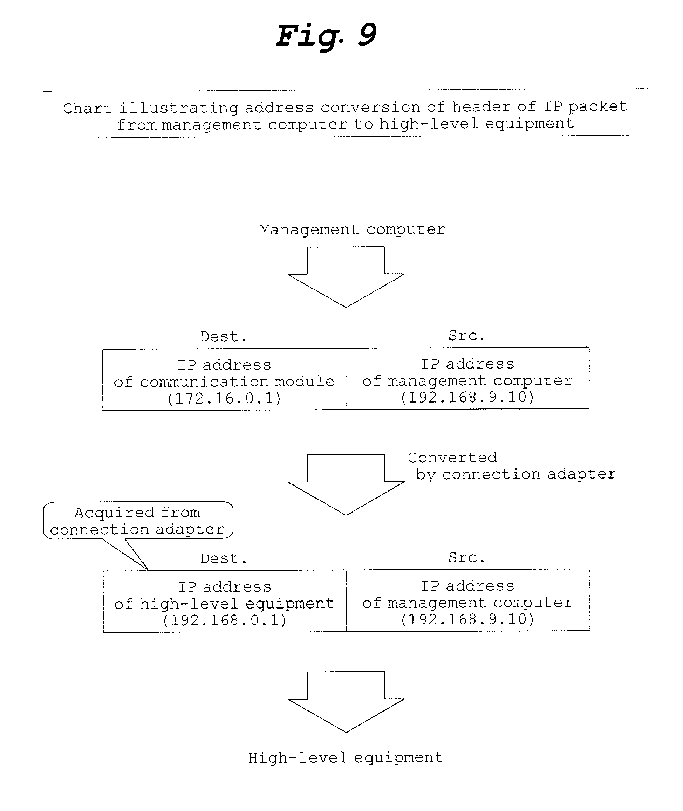

Next, a case in which communication is started from the management computer 51 of the in-house LAN 50 to the high-level equipment 10 will be described with reference to Fig. 7 through Fig. 9. Fig. 7 and Fig. 8 are sequence charts of communication started from the management computer, and Fig. 9 illustrates the process of address conversion.

It is supposed here that the address management server 43 allocates an IP address of "172.16.0.1" to the communication module 20 connected to the high-level equipment 10.

When the management computer 51, in order to communicate with the high-level equipment 10 which is a communication destination, issues a connection request destined for the IP address "172.16.0.1" of the communication module 20 connected to the high-level equipment 10 (step S151), the router 60 relays the packet to the radio packet communication network 40 in accordance with the usual routing rules (step S152).

The radio packet communication network 40 refers to the destination IP address of the packet received from the router 60, and acquires a telephone number matching this IP address from the address management server 43. Then, the radio packet communication network 40 notifies the holder of the telephone number of the receipt of the connection request from the in-house LAN 50 by using a messaging service (step S153). The radio packet communication network 40 discards the packet pertaining to the connection request received from the router 60.

The connection controller 121 of the connection adapter 1 having received the message starts processing of connection to the in-house LAN 50 on the basis of setting data stored in the setting data storage unit 151. More specifically, the connection controller 121 delivers an "ATD9999" command to the communication module 20 (step S154). In response to this AT command, the communication module 20 initiates a call to the relaying equipment 41 of the radio packet communication network 40 (step S155). The connection controller 121 of the connection adapter 1, upon receipt of a response "CONNECT" to the effect that connection has been completed at the line level via the communication module 20 (step S156), starts processing to connect the connection adapter 1 to the in-house LAN 50 by PPP.

First, the connection controller 121 of the connection adapter 1 starts an LCP negotiation with the relaying equipment 41 of the radio packet communication network 40 (step S157). Next, the connection controller 121 of the connection adapter 1 processes PAP authentication with the relaying equipment 41 of the radio packet communication network 40 (step S158). Then, the connection controller 121 of the connection adapter 1 starts an IPCP negotiation between the connection adapter 1 and the relaying equipment 41 of the radio packet communication network 40 (step S159). This results in completion of the IPCP negotiation, and a dynamic IP address of 172.16.0.X is assigned to the connection controller 121 of the connection adapter 1 from the radio packet communication network 40. As stated above, the IP address assigned here is predetermined for the communication module 20, which is a connection terminal. The assigned dynamic IP address is stored into storage means such as an EPROM (not shown).

Upon completion of the PPP negotiation, a connection requesting packet arrives at the connection adapter 1 from the management computer 51 (step S160). As stated above, the radio packet communication network 40 discarded the packet delivered by the management computer 51 at step S151. Therefore, the management computer 51 is unable to receive the response to the connection requesting packet, and retransmits the connection requesting packet owing to a timeout. Since the processing from steps S153 through S159 described above takes some time, some of the retransmitted packets further run into a timeout. Therefore, the connection requesting packet arriving at the connection adapter 1 is the latest among the number of retransmitted packets.

The connection controller 121 of the connection adapter 1, upon receipt of the connection requesting packet from the management computer 51, notifies the high-level equipment 10 of the call arrival (step S161). The high-level equipment 10, upon receipt of the notification of the call arrival, notifies the connection adapter 1 of the response to that notification of the call arrival (step S162), and at the same time starts an LCP negotiation and an IPCP negotiation (steps 163, S164). A point to be noted here is that the connection controller 121 of the connection adapter 1 responds to the high-level equipment 10.

Upon completion of this PPP negotiation, the connection controller 121 of the connection adapter 1 transfers to the high-level equipment 10 the connection requesting packet received from the management computer 51 at step S160 (step S165). Having received the connection requesting packet, the high-level equipment 10 returns the response to the connection adapter 1 (step 166). The connection adapter 1 relays the response packet to the router 60 (step S167). The router 60 relays the response packet to the management computer 51 in accordance with the usual routing rules (step S168).

As the foregoing processing completes the connection between the high-level equipment 10 and the management computer 51, the high-level equipment 10 starts data communication to the management computer 51 (step S169). Hereupon, the communication controller 122 of the connection adapter 1 performs address conversion of the header of the IP packet (step S170). More specifically, as shown in Fig. 9, the fixed terminal IP address (192.168.0.1) and the dynamic terminal IP address (172.16.0.1) are converted into each other.

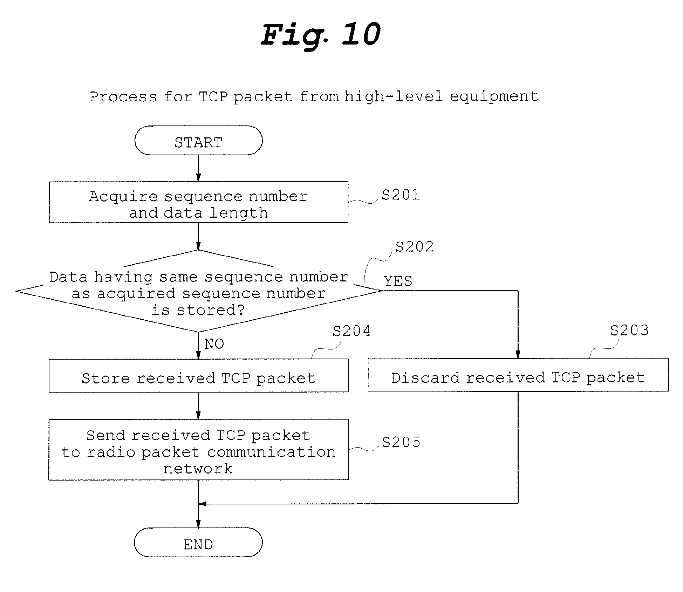

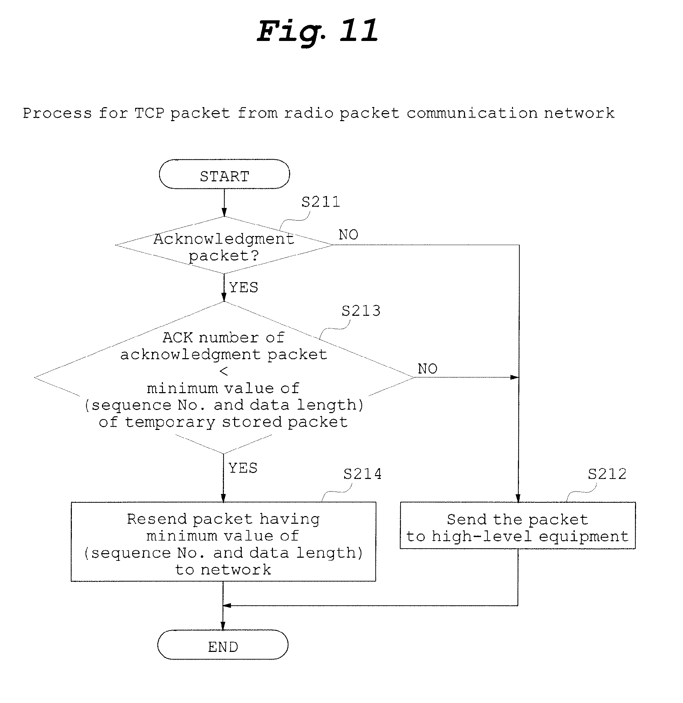

Next, a process of TCP packets will be described with reference to Fig. 10 and Fig. 11. The process aims at the communication of above step S111 and step S169 between the high-level equipment 10 and the management computer 51.

First, a control of TCP packets sent to the radio packet communication network 40 from the high-level equipment 10 will be described with reference to the flow chart of Fig. 10.

Upon receipt a TCP packet from the high-level equipment 10, the communication controller 122 of the connection adapter 1 acquires sequence number and data length from the header part of the TPC packet (step S201). Next, the communication controller 122 checks out whether a TCP packet having the same sequence number as the sequence number of the received TCP packet is stored in the packet temporary storage unit 152 or not (step S202). In other words, the communication controller 122 checks out whether the received TCP packet is a duplicated packet or not. If the received TCP packet is the duplicated packet, the communication controller 122 discards the received packet (step S203). The discard of the packet means there is not any specific process taken for the packet. On the other hand, if the received TCP packet is not the duplicated packet, the communication controller 122 stores the received packet into the packet temporary storage unit 152 (step S204). At the storing process, the communication controller 122 calculates the sum of the sequence number and the data length written in the header part of the received TCP packet, and stores the calculated value associated to the received TCP packet. Next, the communication controller 122 transmits the received packet to the radio packet communication network 40 (step S205).

Next, a control of TCP packets received from the radio packet communication network 40 will be described with reference to the flow chart of Fig. 11.

The communication controller 122 of the connection adapter 1 checks out whether the TCP packet received from the radio packet communication network 40 is an acknowledgment packet, which is associated to the TCP packet from the high-level equipment, from the management computer (step S211). If the received TCP packet is not the acknowledgment packet, the communication controller 122 sends the packet to the high-level equipment 10 (step S212).

On the other hand, if the received TCP packet is the acknowledgment packet, the communication controller 122 confirms whether the ACK number of the acknowledgment packet equals an expected number according to the TCP/IP standard. Specifically the communication controller 122 compares the ACK number of the received TCP packet with a minimum value of the sum of the sequence number and the data length stored in the packet temporary storage unit 152 (step S213). If the ACK number of the received packet is smaller than the minimum value, the communication controller 122 judges an occurrence of packet loss in the radio packet communication network 40, and then resends the TCP packet stored in the packet temporary storage unit 152 (step S214). The objective TCP packet of the resending process is one of TCP packet having the minimum sum of the sequence number and data length in the packet temporary storage unit 152. On the other hand, if the ACK number of the received packet is equal to or greater than the minimum value, the communication controller 122 transmits the received packet to the high-level equipment (step S212).

As described above, the connection adapter 1 of this embodiment enables communication using the radio packet communication network 40, which the high-level equipment 10 did not presuppose, without remodeling or altering the high-level equipment 10. Also the connection adapter 1 of this embodiment prevents flowing out of duplicated packets to the radio packet communication network 40 even if the high-level equipment sends TCP packet doubly. Therefore a network load can be decreased and communication fee can be reduced. Additionally the connection adapter 1 of this embodiment performs retransmission process of TCP packets instead of the high-level equipment 10. Therefore a processing load of the high-level equipment 10 can be reduced.

Although the present invention has been described in detail so far with respect to one embodiment thereof, the invention is not limited to this embodiment. For instance, the foregoing embodiment concerned a telemetering system for monitoring the sewage flow rate, the invention can also be applied to other telemetering systems and telematics systems as well.

Further, although the embodiments cited above are supposed to use communication modules of the CDMA standards by way of example, the invention can also be implemented with modules of other standards. Similarly, other interface standards than those cited above can also be applied on the high-level equipment side.

## Claims

1. A connection adapter for connecting a communication device for use in a radio packet communication network and high-level equipment which performs communication utilizing TCP/IP by using said communication device, comprising:
a connection controller which controls a connection between said high-level equipment and said radio packet communication network; and
a communication controller which relays communication by said high-level equipment using said communication device; wherein:
when said communication controller detects duplication of a TCP packet which the high-level equipment sent to said radio packet communication network, said communication controller discards the duplicated TCP packet.

2. The connection adapter for communication device according to claim 1, further comprising storage means for storing a TCP packet sent to said radio packet communication network, wherein:
when the TCP packet having same sequence number as the TCP packet received from said high-level equipment is stored in said storage means, said communication controller discards the received TCP packet, and when the TCP packet having same sequence number as the TCP packet received from said high-level equipment is not stored in said storage means, said communication controller sends the received TCP packet to said radio packet communication network.

3. The connection adapter for communication device according to claim 2, wherein:
upon receipt of an acknowledgment TCP packet from said radio packet communication network, said communication controller compares an ACK number of the received TCP packet with a minimum number of a sum of sequence number and data length of the TCP packet stored in said storage means; and
if the ACK number is smaller than the minimum number, said communication controller resends the TCP packet stored in said storage means to said radio packet communication network.
